Europäisches Patentamt

European Patent Office

Office européen des brevets

(11) Veröffentlichungsnummer: **0 405 325 B1**

## EUROPÄISCHE PATENTSCHRIFT

(45) Veröffentlichungstag der Patentschrift: **08.06.94**

(21) Anmeldenummer: **90111720.0**

(22) Anmeldetag: **21.06.90**

(51) Int. Cl.5: **C08J 9/20**, //(C08J9/20, C08L25:04)

(54) **Perlförmige expandierbare Styrolpolymerisate mit hohem Expandiervermögen.**

(30) Priorität: **28.06.89 DE 3921148**

(43) Veröffentlichungstag der Anmeldung:
**02.01.91 Patentblatt 91/01**

(45) Bekanntmachung des Hinweises auf die
Patenterteilung:
**08.06.94 Patentblatt 94/23**

(84) Benannte Vertragsstaaten:
**AT BE DE ES FR GB IT NL**

(56) Entgegenhaltungen:
**EP-A- 0 106 129**

(73) Patentinhaber: **BASF Aktiengesellschaft**
**Carl-Bosch-Strasse 38**
**D-67063 Ludwigshafen(DE)**

(72) Erfinder: **Hahn, Klaus, Dr.**
**Im Buegen 9**
**D-6719 Kirchheim(DE)**
Erfinder: **Guhr, Uwe, Dr.**
**Beim Hochgericht 9**
**D-6718 Gruenstadt(DE)**
Erfinder: **Hintz, Hans, Dr.**
**Wolframstrasse 4**
**D-6700 Ludwigshafen(DE)**
Erfinder: **Richter, Rolf**
**Rethelstrasse 7**
**D-6800 Mannheim 1(DE)**

**Beschreibung**

Die Erfindung betrifft expandierbare Styrolpolymerisate, die sich durch ein hohes Expandiervermögen und durch ein hohes Verhältnis des Expandiervermögens zur Treibmittelmenge auszeichnen.

Aus der EP-B 106 129 ist ein expandierbares Polystyrol mit verbesserter Expandierbarkeit bekannt, bei dem das Polystyrol ein mittleres Molekulargewicht $M_w$ (Gewichtsmittel zwischen 130 000 und 180 000 aufweist und bei dem die hochmolekulare Flanke der Molekulargewichtsverteilungskurve so steil ist, daß die Differenz der Mittelwerte $(M_{z+1}-M_z)$ weniger als 150 000 beträgt. Gemäß den Beispielen dieser Patentschrift können aus derartigem expandierbarem Polystyrol das etwa 1 Mol Pentan pro kg Polystyrol enthält, durch Aufschäumen mit hohem Durchsatz Schaumstoffperlen mit einem Schüttgewicht von 15 g/l hergestellt werden.

Der vorliegenden Erfindung lag die Aufgabe zugrunde, expandierbares Polystyrol zu entwickeln, welches ein wesentlich höheres Expandiervermögen besitzt, das also mit vergleichbaren Treibmittelmengen zu einem wesentlich niedrigerem Schüttgewicht aufgeschäumt werden kann, bzw. vergleichbare Schüttgewichte bereits mit wesentlich geringeren Treibmittelmengen herzustellen gestattet.

Es wurde nun überraschenderweise gefunden, daß diese Aufgabe gelöst wird wenn das Styrolpolymerisat ein mittleres Molekulargewicht $M_w$ von mehr als $60 \cdot 10^3$ und weniger als $130 \cdot 10^3$ aufweist und eine steile hochmolekulare Flanke besitzt.

Gegenstand der Erfindung sind somit perlförmige expandierbare Styrolpolymerisate mit einem Expandiervermögen E zwischen 30 und 80, wobei E das Verhältnis Schüttdichte der expandierbaren Perlen zu Schüttdichte der durch Dampfbehandlung (6 min., 120°C) erhaltenen Schaumstoffperlen bedeutet, enthaltend

a) ein Styrolpolymerisat mit einem mittleren Molekulargewicht $M_w$ (Gewichtsmittel), gemessen nach der GPC-Methode von mehr als $60 \cdot 10^3$ und weniger als $130 \cdot 10^3$ und einer steilen hochmolekularen Flanke der nach der GPC-Methode gemessenen Molekulargewichtsverteilungskurve, wobei die Differenz der Mittelwerte $(M_{z+1}-M_z)$ weniger als $150 \cdot 10^3$ beträgt,

b) 0, 15 - 1,5 Mol eines $C_3$- bis $C_6$-Kohlenwasserstoffs pro kg der Komponente a) als Treibmittel, und gegebenenfalls

c) übliche Zusatzstoffe in wirksamen Mengen.

Überraschenderweise wird die Dimensionsstabilität der aus den neuen expandierbaren Styrolpolymerisaten hergestellten Schaumstoff-Formkörper nicht negativ beeinflußt.

Als Hauptkomponente a) enthalten die neuen Produkte Polystyrol und/oder ein Styrolcopolymerisat mit mindestens 50 Gew.%, vorzugsweise mindestens 80 Gew.% einpolymerisiertem Polystyrol. Als Comonomere kommen z. B. in Frage α-Methylstyrol, kernhalogenierte Styrole, kernalkylierte Styrole, Acrylnitril, Ester der Acryl- oder Methacrylsäure von Alkoholen mit 1 bis 8 C-Atomen, N-Vinylcarbazol und Maleinsäure(anhydrid). Vorteilhaft kann das Polystyrol eine geringe Menge eines Vernetzers einpolymerisiert enthalten, d. h. einer Verbindung mit mehr als einer, vorzugsweise 2 Doppelbindungen, wie Divinylbenzol, Butadien oder Butandioldiacrylat. Der Vernetzer wird im allgemeinen in Mengen von 0,005 bis 0,05 Mol%, bezogen auf Styrol, verwendet.

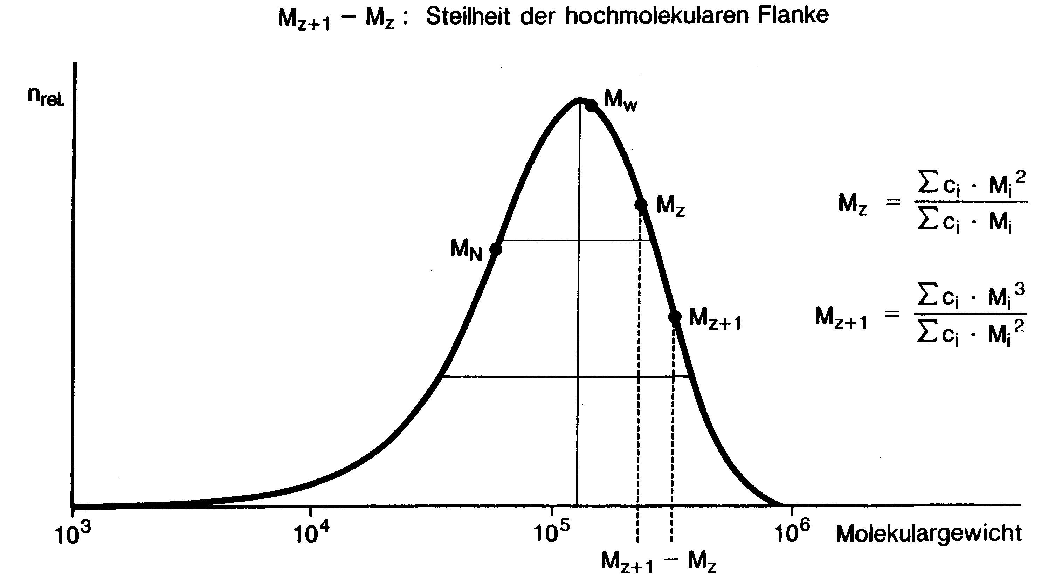

Die erfindungsgemäßen Styrolpolymerisate unterscheiden sich von solchen nach dem Stand der Technik durch ihr Molekulargewicht und ihre Molekulargewichtsverteilung. Das Molekulargewicht wird durch Gelpermeationschromatographie ermittelt. Die GPC-Methode ist ausführlich beschrieben in G. Glöckler, Polymercharakterisierung. Chromatographische Methoden Band 17, Hüthig-Verlag, Heidelberg 1982. Erfindungsgemäß weist das Polystyrol ein mittleres Molekulargewicht $M_w$ (Gewichtsmittel) von mehr als $60 \cdot 10^3$ und weniger als $130 \cdot 10^3$ auf, vorzugsweise zwischen $70 \cdot 10^3$ und $128 \cdot 10^3$, insbesondere zwischen $75 \cdot 10^3$ und $125 \cdot 10^3$. Es ist ferner durch seine Molekulargewichtsverteilung charakterisiert, wobei die hochmolekulare Flanke der Molekulargewichtsverteilungskurve so steil sein muß, daß die Differenz der Mittelwerte $(M_{z+1} - M_z)$ weniger als $150 \cdot 10^3$, vorzugsweise weniger als $130 \cdot 10^3$ und insbesondere weniger als $120 \cdot 10^3$ beträgt. Die genannten Mittelwerte sind beschrieben und definiert bei H. G. Elias. Makromoleküle, Hüthig-Verlag 1971. Seiten 52 und 64. Die Abbildung zeigt eine typische, durch GPC-Messungen erhaltene Molekulargewichtsverteilungskurve, in der die relative Häufigkeit $n_{rel}$ der Polymerketten eines bestimmten Molekulargewichts gegen das Molekulargewicht aufgetragen ist. $M_w$ ist das Gewichtsmittel und $M_n$ das Zahlenmittel: $M_z$ und $M_{z+1}$ sind weitere Mittelwerte, die nach Elias rechnerisch bestimmt werden können und auf der hochmolekularen Flanke der Kurve liegen. Ihre Differenz $(M_{z+1}-M_z)$ ist ein Maß für die Steilheit dieses Kurventeils.

Die expandierbaren Styrolpolymerisate enthalten als Treibmittel 0,15 bis 1,5 Mol, vorzugsweise 0,3 bis 1,2 Mol und insbesondere 0,5 bis 1,0 Mol, eines $C_3$- bis $C_6$-Kohlenwasserstoffs, wie Propan, Butan, Isobutan, n-Pentan, i-Pentan, Neopentan und/oder Hexan. Vorzugsweise wird ein handelsübliches Pentan-Gemisch verwendet.

Die Polystyrolteilchen können auch Zusätze an anderen Stoffen enthalten, die den expandierbaren Produkten bestimmte Eigenschaften verleihen. Genannt seien beispielsweise Flammschutzmittel auf Basis von organischen Brom- oder Chlorverbindungen, wie Trisdibrompropylphosphat, Hexabromcyclododecan. Chlorparaffin sowie Synergisten für Flammschutzmittel, wie Dicumyl und hochzersetzliche organische Peroxide; ferner Antistatika, Stabilisatoren, Farbstoffe, Schmiermittel, Füllstoffe und beim Vorschäumen antiverklebend wirkende Stoffe, wie Zinkstearat, Melaminformaldehydkondensate oder Kieselsäure, sowie Mittel zur Verkürzung der Entformzeit beim Ausschäumen, wie z. B. Glycerinester oder Hydroxycarbonsäureester. Die Zusatzstoffe können je nach der beabsichtigten Wirkung in den Teilchen homogen verteilt oder als Oberflächenbeschichtung vorliegen.

Die expandierbaren Styrolpolymerisate sind gekennzeichnet durch ein hohes Expandiervermögen E zwischen 30 und 80, vorzugsweise zwischen 40 und 80 und insbesondere zwischen 50 und 80, wobei E das Verhältnis der Schüttdichte der expandierbaren Perlen zur Schüttdichte der durch Dampfbehandlung (6 min bei 120°C) erhaltenen Schaumstoffperlen bedeutet.

Die expandierbaren Styrolpolymerisate zeichnen sich weiterhin dadurch aus, daß das Verhältnis des Expandiervermögens E zur Treibmittelmenge M (= Mol Treibmittel pro kg Styrolpolymerisat) zwischen 30 und 80, vorzugsweise zwischen 40 und 80, insbesondere zwischen 50 und 75 liegt. Die neuen Produkte tragen somit zur Entlastung der Umwelt bei, da zur Erzielung der gleichen Dichte wesentlich geringere Treibmittelmengen als nach dem Stand der Technik benötigt werden.

Nach einem bevorzugten Verfahren werden die erfindungsgemäßen treibmittelhaltigen Polystyrolteilchen hergestellt durch Polymerisation von Styrol in wäßriger Suspension, wobei vor, während oder nach der Polymerisation die oben beschriebenen Treibmittel und gegebenenfalls die Zusatzstoffe zugesetzt werden. Während der Polymerisation, vorteilhaft bei einem Styrol-Umsatz zwischen 20 und 90 %, werden mehr als 0,5 Gew.% und bis zu 3 % eines üblichen, vorzugsweise bromfreien Reglers mit einer Kettenübertragungskonstanten K zwischen 0,1 und 50 zugegeben.

Die Suspensionspolymerisation von Styrol ist an sich bekannt. Sie ist ausführlich beschrieben im Kunststoff-Handbuch, Band V. = Polystyrol = Carl Hanser-Verlag, Seiten 679 bis 688. Dabei wird Styrol in Wasser suspendiert, wobei übliche organische oder anorganische Suspensionsstabilisatoren, vorzugsweise in Mengen zwischen 0,05 und 2 Gew.%, bezogen auf die Suspension, zugesetzt werden. Die Polymerisation wird im allgemeinen bei einer Temperatur zwischen 80 und 130°C, vorzugsweise zwischen 100 und 120°C ausgeführt. Zum Start der Polymerisation werden organische Polymerisationsinitiatoren, z. B. Peroxide oder Azoverbindungen verwendet, die unter dem Einfluß der Wärme in Radikale zerfallen. Sie werden in Mengen von 0,01 bis 1 Gew.%, bezogen auf die Monomeren, eingesetzt. Die Kettenüberträger werden dem Polymerisationsansatz im allgemeinen bei einem Umsatz zwischen 20 und 90 %, vorzugsweise zwischen 40 und 60 % zugesetzt. Unter Umsatz ist der prozentuale Anteil der polymerisierten Monomeren, bezogen auf die gesamten eingesetzten Monomeren, zu verstehen. Er kann beispielsweise dadurch gemessen werden, daß man die Polymerisation nach einer gewissen Zeit abbricht, z. B. durch Zusatz von Inhibitoren, und die Menge der nicht polymerisierten Monomeren bestimmt.

Es werden Kettenüberträger mit einer Übertragungskonstanten K (nach Vollmert, Grundriß der Makromolekularen Chemie, Springer Verlag 1962, Seiten 52 und 71) zwischen 0,1 und 50, bevorzugt zwischen 1 und 30, verwendet. In Frage kommen beispielsweise:

| | |
|---|---|
| n-Dodecylmercaptan | (K = 19) |
| tert.-Dodecylmercaptan | (K = 3) |
| n-Butylmercaptan | (K = 22) |
| tert.-Butylmercaptan | (K = 3,6) |
| Pentaphenylethan | (K = 2,0) |
| dimeres $\alpha$-Methylstyrol | (K = 0,5) |

Der Gehalt an Styrol in den expandierbaren Styrolpolymerisaten sollte im allgemeinen niedrig sein und üblicherweise weniger als 0,2 Gew.%, vorzugsweise weniger als 0,1 Gew.%, insbesondere weniger als 0,08 Gew.% betragen. Zur Erreichung dieses Ziels ist es zweckmäßig, bei Verwendung von Mercaptanen als Regler, diese erst während der Polymerisation bei einem Umsatz zwischen 20 und 90 % zuzufügen.

Die erfindungsgemäßen treibmittelhaltigen Polystyrol-Teilchen sind perlförmig und haben im allgemeinen einen Durchmesser zwischen 0,2 und 4 mm. Sie können nach üblichen Methoden, z. B. mit Wasserdampf, zu Schaumstoffteilchen mit einem Durchmesser zwischen 0,5 und 2 cm und einer Dichte zwischen 5 und 100 g · l$^{-1}$ vorgeschäumt werden. Es zeigt sich, daß dabei der Durchsatz durch die

EP 0 405 325 B1

zudosierten Kettenüberträger erheblich erhöht wird.

Die vorgeschäumten Teilchen können dann nach üblichen Verfahren zu Schaumstoff-Formteilen mit einem Raumgewicht von 5 bis 100 g • 1$^{-1}$ ausgeschäumt werden.

Der Zusatz von Kettenüberträgern beeinflußt das Molekulargewicht und die Molekulargewichtsverteilung der entstehenden Polymeren, und damit auch deren rheologische Eigenschaften, die ihrerseits für die Expandierbarkeit der treibmittelhaltigen Polystyrolteilchen und die Dimensionsstabilität von daraus hergestellten Schaumstoff-Formkörpern verantwortlich sind. So führt z. B. eine Erniedrigung der Dehnviskosität zu besserer Expandierbarkeit und eine Absenkung der reversiblen Dehnung bei gleicher Dehnviskosität zu besserer Dimensionsstabilität. Beide Eigenschaften können an den treibmittelhaltigen Styrolpolymerisat-Teilchen direkt nach einer Vorschrift in "Prüfung hochpolymerer Werkstoffe" Carl Hanser Verlag Wien, 1977, Seite 422, gemessen werden:

Die Polystyrol-Teilchen werden durch Erhitzen auf 155 ° C aufgeschmolzen und 5 min lang entgast, wobei das Treibmittel verdampft. Durch Extrusion wird ein Polymerstrang mit einer Länge von 20 mm und einem Durchmesser von 5 mm hergestellt. Die Probe wird in eine Zugapparatur eingespannt, die sich in 150 ° C heißem Silikonöl befindet. Dort wird sie mit einer Zugspannung von 2 • 10$^4$ Pa auf eine Länge von 300 mm gedehnt. Die Dehnviskosität ergibt sich als Verhältnis von Zugkraft zu Dehngeschwindigkeit. Nach dem Aufheben der Zugspannung schrumpft die Probe wieder. Die reversible Dehnung E ist der natürliche Logarithmus des Verhältnisses Ausgangslänge der Probe zur Länge der Probe nach dem Schrumpfen.

Die erfindungsgemäßen treibmittelhaltigen Polystyrolteilchen haben - gemessen nach der beschriebenen Methode - eine Dehnviskosität von weniger als 4,2 • 10$^6$ [Pas], vorzugsweise von 1,5 bis 3,0 • 10$^6$ - [Pas] und eine reversible Dehnung von weniger als 0,95, vorzugsweise von 0,6 bis 0,9. Die in den Beispielen genannten Teile und Prozente beziehen sich auf das Gewicht.

Beispiele 1 - 9

1. Polymerisation

In einem druckfesten Rührkessel wurde eine Mischung aus 150 Teilen Wasser, 0,1 Teilen Natriumpyrophosphat, 100 Teilen Styrol, 0,45 Teilen Benzoylperoxid, 0,15 Teilen tert.-Butylperbenzoat und den in der Tabelle angegebenen Mengen Pentan unter Rühren auf 90 ° C erhitzt.

Nach 2 Stunden bei 90 ° C wurden 4 Teile einer 10 %igen wäßrigen Lösung von Polyvinylpyrrolidon zugegeben.

Dann wurde weitere 2 Stunden bei 90 ° C, anschließend 2 Stunden bei 100 ° C und schließlich 2 Stunden bei 120 ° C gerührt. Die in der Tabelle angegebenen Kettenüberträger wurden nach der in der Tabelle angegebenen Zeit zugesetzt.

Das erhaltene Perlpolymerisat mit einem mittleren Teilchendurchmesser von 1,5 mm wurde isoliert und getrocknet.

2. Zur Untersuchung der Expandierbarkeit diente ein mit einem Metallrahmen eingefaßtes Sieb (Maschenweite: 0,1 - 0,2 mm) mit den Abmessungen 1000 x 800 x 250 mm, welches sich in einem abgeschlossenen Metallgehäuse mit Dampfzuleitung und Dampfabzugsvorrichtung befand.

Der Wasserdampf von 120 ° C strömte von unten in die Vorschäumapparatur ein, passierte das Drahtgewebe mit den zu prüfenden Produkten und konnte durch die Dampfabzugsvorrichtung wieder entweichen. Vor Beginn der Prüfungen wurde die Apparatur zunächst ca. 5 min vorgeheizt. Anschließend wurden 100 g der expandierbaren Perlpolymerisate mit einem Teilchendurchmesser zwischen 1,0 und 2,0 mm auf dem Drahtgewebe gleichmäßig verteilt, die Apparatur geschlossen und das Dampfventil geöffnet. Nach 6 min wurde das Dampfventil wieder geschlossen und das Metallgehäuse geöffnet. Von dem vorgeschäumten Material wurde anschließend die Schüttdichte bestimmt.

Die erhaltenen Ergebnisse sind in der Tabelle zusammengestellt.

3. Molekulargewichtsmessung

Die mittleren Molekulargewichte und die Molekulargewichtsverteilung wurden nach der GPC-Methode bestimmt. Dabei wurde eine Säulenkombination zusammengestellt, die sowohl im niedermolekularen wie im hochmolekularen Bereich eine möglichst optimale Auftrennung gewährleistet.

Die Säulenkombination besteht aus 5 hintereinandergeschalteten Säulen. Bei einer Einzellänge von je L = 300 und einem Innendurchmesser D = 10 mm wurden folgende Silica-Säulen verwendet:

1 x Si 60
1 x Si 100
1 x Si 300
2 x Si 1000

Das Füllmaterial sind LiChrospher und LiChrosorb der Fa. Merck (Silicagele) mit einer Korngröße von 10

4

μm (Ausnahme Si 60 = LiChrosorb).

Der Durchfluß beträgt 2,8 ml/min. das Lösungsmittel für Polystyrol ist Tetrahydrofuran. Es wurden von einer 0,5 %igen Lösung 200 μl bei Zimmertemperatur eingespritzt. Als Detektor ist ein Differentialrefraktometer der Fa. Knauer. Dual-Detektor Typ 61.00 eingebaut. Zur Kontrolle der gleichmäßigen Durchflußgeschwindigkeit wird ein Tropfenzähler verwendet.

Zur Umrechnung der dabei erhaltenen Meßwerte auf das Molekulargewicht wird parallel aus 12 engverteilten Polystyrolproben der Fa. Pressure Chemical Co. mit bekanntem Molekulargewicht eine Eichkurve erstellt.

Zur Standardisierung der verwendeten Säulenkombination wird die vom National Bureau of Standards charakterisierte breite Polystyrolprobe Nr. 706 gemessen. Dabei ergaben sich folgende Mittelwerte für das Molekulargewicht dieser Polystyrolprobe:

$M$ = 74.000

$M_w$ = 243.000

$M_z$ = 392.000

Tabelle

| Beispiel | 1 | 2 | 3 | 4 | 5 | 6 | 7 | 8* Vergleich | 9* Vergleich |
|---|---|---|---|---|---|---|---|---|---|
| Pentan [Mol/kg Styrol] M | 0,8 | 0,8 | 1,3 | 1,3 | 1,3 | 1,3 | 1,3 | 1 | 1 |
| Kettenüberträger tert.-Dodecylmercaptan [Gew.%] | 0,7 | 1,0 | 0,7 | 1,0 | 1,5 | - | - | 0,3 | - |
| Kettenüberträger dimeres α-Methylstyrol [Gew.%] | - | - | - | - | - | 1,0 | 2,0 | - | - |
| Dosierzeitpunkt [% Umsatz] | 45 | 50 | 50 | 50 | 50 | 0 | 0 | 55 | - |
| $M_w \cdot 10^3$ | 110 | 97 | 108 | 95 | 80 | 101 | 83 | 134 | 221 |
| $M_{z+1} - M_z \cdot 10^3$ | 131 | 111 | 129 | 103 | 101 | 121 | 110 | 133 | 163 |
| Expandiervermögen E | 49 | 56 | 64 | 73 | 76 | 63 | 74 | 45 | 40 |
| E/M | 61 | 70 | 49 | 56 | 58 | 48 | 57 | 45 | 40 |

* gemäß EP-B 106 129

**Patentansprüche**

1. Perlförmige expandierbare Styrolpolymerisate mit einem Expandiervermögen E zwischen 30 und 80, wobei E das Verhältnis Schüttdichte der expandierbaren Perlen zu Schüttdichte der durch Dampfbehandlung (6 min., 120°C) erhaltenen Schaumstoffperlen bedeutet, enthaltend

a) ein Styrolpolymerisat mit einem mittleren Molekulargewicht $M_w$ (Gewichtsmittel), gemessen nach der GPC-Methode von mehr als $60 \cdot 10^3$ und weniger als $130 \cdot 10^3$ und einer steilen hochmolekularen Flanke der nach der GPC-Methode gemessenen Molekulargewichtsverteilungskurve, wobei die Differenz der Mittelwerte $(M_{z+1}-M_z)$ weniger als $150 \cdot 10^3$ beträgt,

b) 0,15 - 1,5 Mol eines $C_3$- bis $C_6$-Kohlenwasserstoffs pro kg der Komponente a) als Treibmittel, und gegebenenfalls

c) übliche Zusatzstoffe in wirksamen Mengen.

2. Perlförmige expandierbare Styrolpolymerisate nach Anspruch 1, dadurch gekennzeichnet, daß das Verhältnis des Expandiervermögens E zur Molmenge M des Treibmittels, E : M = 30 bis 80 beträgt.

3. Perlförmige expandierbare Styrolpolymerisate nach Anspruch 1 bis 2, dadurch gekennzeichnet, daß der Gehalt an Styrol weniger als 0,2 Gew.% beträgt.

4. Verfahren zur Herstellung perlförmiger expandierbarer Styrolpolymerisate mit einem mittleren Molekulargewicht Mw (Gewichtsmittel), gemessen nach der GPC-Methode von mehr als 60000 und weniger als 130000, bei dem man Styrol und gegebenenfalls weitere Comonomere in wäßriger Suspension in Gegenwart eines üblichen Reglers mit einer Kettenübertragungskonstante K zwischen 0.1 und 50 polymerisiert und vor, während oder nach der Polymerisation das Treibmittel und gegebenenfalls übliche Zusatzstoffe zufügt, dadurch gekennzeichnet, daß man mehr als 0.5 Gew.% und bis zu 3 Gew.% des Reglers zugibt.

5. Verfahren nach Anspruch 4, dadurch gekennzeichnet, daß man als Regler Mercaptane, vorzugsweise tert.-Dodecylmercaptan und/oder dimeres $\alpha$-Methylstyrol verwendet.

6. Verwendung der perlförmigen expandierbaren Styrolpolymerisate gemäß Anspruch 1 zur Herstellung von Schaumstoffen mit einer Dichte von 0,005 bis 0,1 g/cm$^3$.

## Claims

1. A bead-form expandable styrene polymer having an expansion capacity E of from 30 to 80, where E is the ratio of the bulk density of the expandable beads to the bulk density of the foam beads obtained by steam treatment (6 minutes, 120°C), and containing

a) a styrene polymer having a mean molecular weight $M_w$ (weight average), measured by the GPC method, of greater than $60 \cdot 10^3$ and less than $130 \cdot 10^3$ and a steep high-molecular-weight flank of the molecular-weight distribution curve, measured by the GPC method, the difference in the means $(M_{z+1}-M_z)$ being less than $150 \cdot 10^3$,

b) 0.15 - 1.5 mol of a $C_3$- to $C_6$-hydrocarbon per kg of component a) as blowing agent, and, if desired,

c) customary additives in effective amounts.

2. A bead-form expandable styrene polymer as claimed in claim 1, wherein the ratio between the expansion capacity E and the number of moles M of the blowing agent, E : M, is from 30 to 80.

3. A bead-form expandable styrene polymer as claimed in claim 1 or 2, wherein the content of styrene is less than 0.2% by weight.

4. A process for the preparation of a bead-form expandable styrene polymer having a mean molecular weight $M_w$ (weight average), measured by the GPC method, of greater than 60,000 and less than 130,000, in which process styrene and, if desired, further comonomers in aqueous suspension is (are) polymerized in the presence of a customary regulator having a chain-transfer constant K of from 0.1 to 50, and the blowing agent and, if desired, customary additives is (are) added before, during or after the polymerization, which comprises adding more than 0.5% by weight and up to 3% by weight of the regulator.

5. A process as claimed in claim 4, wherein the regulator used is a mercaptan, preferably tert.-dodecyl mercaptan and/or dimeric $\alpha$-methylstyrene.

**6.** The use of a bead-form expandable styrene polymer as claimed in claim 1 for the production of foams having a density of from 0.005 to 0.1 g/cm$^3$.

**Revendications**

**1.** Polymères du styrène expansibles, en forme de perles, doués d'un pouvoir d'expansion E compris entre 30 et 80, où E désigne le rapport de la masse spécifique apparente des perles expansibles à la masse spécifique apparente des perles de mousse obtenues par traitement à la vapeur d'eau (6 minutes, 120°C), qui contiennent

a) un polymère du styrène d'un poids moléculaire moyen M$_p$ (moyenne en poids), mesuré selon la méthode GPC (GPC = chromatographie en phase gazeuse) supérieur à 60.10$^3$ et inférieur à 130.10$^3$ et un flanc ou pente des hauts poids moléculaires raide de la courbe de distribution ou répartition des poids moléculaires mesurée selon la méthode GPC, où la différence des valeurs moyennes (M$_{z+1}$-M$_z$) est inférieure à 150.10$^3$,

b) 0,15 à 1,5 mole d'un hydrocarbure en C$_3$ à C$_6$ par kg du composant a), à titre d'agent porogène et, éventuellement,

c) des additifs usuels en proportions actives.

**2.** Polymères du styrène expansibles, en forme de perles, suivant la revendication 1, caractérisés en ce que le rapport du pouvoir d'expansion E à la masse moléculaire M de l'agent porogène, E:M = 30 à 80.

**3.** Polymères du styrène expansibles, en forme de perles, suivant l'une quelconque des revendications 1 et 2, caractérisés en ce que la teneur en styrène est inférieure à 0,2% en poids.

**4.** Procédé de préparation de polymères du styrène expansibles, en forme de perles, d'un poids moléculaire moyen M$_p$ (moyenne en poids), mesuré selon la méthode GPC, supérieur à 60000 et inférieur à 130000, conformément auquel on polymérise le styrène et éventuellement d'autres comonomères en suspension aqueuse et en présence d'un régulateur usuel, d'une constante de transfert de chaînes K comprise entre 0,1 et 50 et on ajoute l'agent porogène et éventuellement des additifs habituels, avant, pendant, ou après la polymérisation, caractérisé en ce que l'on ajoute plus de 0,5% en poids et jusqu'à 3% en poids du régulateur.

**5.** Procédé suivant la revendication 4, caractérisé en ce que l'on utilise, à titre de régulateur, des mercaptans, de préférence le tert-dodécylmercaptan et/ou l'$\alpha$-méthylstyrène dimérique.

**6.** Utilisation des polymères du styrène expansibles, en forme de perles, suivant la revendication 1, en vue de la fabrication de mousses d'une masse spécifique de 0,005 à 0,1 g/cm$^3$.

$M_{z+1} - M_z$ :  Steilheit der hochmolekularen Flanke

$$M_z = \frac{\sum c_i \cdot M_i^2}{\sum c_i \cdot M_i}$$

$$M_{z+1} = \frac{\sum c_i \cdot M_i^3}{\sum c_i \cdot M_i^2}$$

$n_{rel.}$

$M_w$

$M_z$

$M_N$

$M_{z+1}$

$10^3$  $10^4$  $10^5$  $10^6$  Molekulargewicht

$M_{z+1} - M_z$